# EUROPÄISCHE PATENTSCHRIFT

(11) **EP 0 943 165 B1**
(45) Veröffentlichungstag und Bekanntmachung des Hinweises auf die Patenterteilung: **28.01.2004**
(21) Anmeldenummer: 98954342.6
(22) Anmeldetag: 06.10.1998
(51) Int. Cl.: H01R 9/26, H02B 1/26, H02B 1/21

(54) **SCHALTSCHRANK**
SWITCH CUPBOARD
ARMOIRE ELECTRIQUE

(30) Priorität: 06.10.1997 DE 19743974
(43) Veröffentlichungstag der Anmeldung: 22.09.1999
(73) Patentinhaber: Phoenix Contact GmbH & Co. KG, 32825 Blomberg (DE)
(72) Erfinder: BERG, Roland, D-37671 Höxter (DE); FÜRHOFF, Achim, D-32278 Kirchlengern (DE); LEIFER, Christoph, D-33014 Bad Driburg (DE); REIBKE, Heinz, D-32105 Bad Salzuflen (DE); ROHS, Markus, D-32816 Schieder-Schwalenberg (DE); WECZEREK, Jürgen, D-32825 Blomberg (DE)
(74) Vertreter: Gesthuysen, von Rohr & Eggert
(86) Internationale Anmeldenummer: PCT/EP1998/006328
(87) Internationale Veröffentlichungsnummer: WO 1999/018634

(56) Entgegenhaltungen:
- EP-A1- 0 112 232
- WO-A1-94/18816
- WO-A1-97/10692
- DE-A1- 3 717 691

## Beschreibung

Die Erfindung betrifft einen Schaltschrank mit einem Schaltschrankkasten, mit mehreren Modulen und mit einer Tragschiene, wobei die Module auf der Tragschiene befestigt sind.

In Fabriken sowie in Werks- und Montagehallen befinden sich - meist in größeren Anzahl und an vorgegeben Plätzen - großflächige, baugruppenorientierte Schaltschränke. In diesen - oft kleiderschrankgroßen - Schaltschränken befindet sich eine Vielzahl von elektrischen oder elektronischen Bauteilen und Geräten, die zur Versorgung und Steuerung der unterschiedlichen Maschinen, welche in der Werkshalle verteilt sind, notwendig sind. Typischerweise gehören zu den elektrischen oder elektronischen Bauteilen und Geräte, welche sich in einem solchen Schaltschrank befinden, Leistungsschalter, Netzteile, Ein/Ausgabemodule, Sicherungen, Transformatoren und Klemmen zur Zugangsverdrahtung sowie zur Zwischen- und Abgangsrangierung. Die einzelnen elektrischen oder elektronischen Bauteile und Geräte sind dabei baugruppenorientiert im Schaltschrank angeordnet d. h. in einem Bereich des Schaltschrankes befinden sich beispielsweise mehrere Ein/Ausgabemodule, in einem anderen Bereich sämtliche Leistungsschalter.

Klassische Schaltschränke der zuvor beschriebenen Art haben nun mehrere Nachteile. Zunächst haben sie aufgrund ihrer Größe einen sehr hohen Platzbedarf. Durch den baugruppenorientierten Schaltschrankaufbau ist eine durch die Änderung einer einzelnen Maschine notwendige Erweiterung des Schaltschrankes sehr aufwendig. Dies erfordert eine sorgfältige und aufwendige individuelle Projektierung eines jeden einzelnen Schaltschrankes, wobei der Bauteile- und Gerätebedarf der derzeitigen und möglicher zukünftiger Maschinen berücksichtigt werden muß. Um eine spätere Änderung einer Maschine überhaupt zu ermöglichen, wird daher häufig eine größere Anzahl von Bauteilen und Geräten, als Reserve im Schaltschrank installiert. Dies verursacht zum einen zusätzliche Kosten durch die Reservebauteile und -geräte, zum anderen wird der Platzbedarf dadurch weiter erhöht. Besonders nachteilig ist die aufwendige Querverdrahtung der einzelnen Bauteile und Geräte über als Zwischenrangierung dienende Reihenklemmen. Diese Querverdrahtung ist zum einen sehr zeitaufwendig, zum anderen nur durch Personal mit sehr hohem Fachwissen durchführbar und auch dann noch sehr fehlerträchtig. Ist ein Fehler dann einmal aufgetreten; ist zum einen die Fehlersuche sehr schwierig und damit zeitraubend, zum anderen kann es erforderlich sein, eine Mehrzahl von Maschinen unter Umständen für eine längere Zeit abzuschalten.

Aus der DE 37 17 691 A1 ist ein Verdrahtungssystem für elektrische bzw. elektronische Steuerungen innerhalb eines Schaltschranks bekannt, bei dem die Zusammenschaltung der einzelnen Komponenten durch vorkonfektionierte Steckverbindungen an den einzelnen Modulen vereinfacht ist. Die einzelnen Module bzw. die einzelnen Anschlußstellen der Module werden durch Rund- oder Flachbandkabeln miteinander verbunden. Durch die Übersichtlichkeit des Verdrahtungssystems soll es möglich sein, daß auch eine Person ohne Vorkenntnisse in der Verdrahtungstechnik einen Schaltschrank verdrahten kann. Es soll ein "Schaltschrank von der Stange" entworfen werden.

In den letzten Jahren hat man damit begonnen, durch die Verwendung von Bus-Systemen beim Anschluß von Sensoren, Aktoren und auch von verschiedenen Ein/ Ausgabemodulen den Aufwand der klassischen Einzelverdrahtung dieser Bauteile bzw. Geräte zu verringern. Der vorliegenden Erfindung liegt somit die Aufgabe zugrunde, die Vorteile, die ein solches Bus-System bei der Daten- und Energieübertragung bietet, auch für eine neue Generation von Schaltschränken zu nutzen. Dabei sollen die oben beschriebenen Nachteile der klassischen Schaltschränke vermieden werden.

Die zuvor aufgezeigte Aufgabe ist zunächst und im wesentlichen dadurch gelöst, daß der Schaltschrank funktionsblockorientiert und modular aufgebaut ist, nämlich alle für eine Maschine notwendigen Module und nur diese eingebaut sind und daß die elektrische Verbindung der einzelnen Module ohne Querverdrahtung verwirklicht ist, wobei die Verbindung der einzelnen Module untereinander mittels Kontaktschwerter erfolgt. Der erfindungsgemäße Schaltschrank enthält damit nur noch die Anzahl an Modulen, die für seine bestimmungsgemäße Funktion notwendig ist. Durch den modularen Aufbau des Schaltschrankes ist eine optimale Anpassung an die Erfordernisse einer jeden einzelnen Maschine möglich. Im übrigen ist der notwendige Platzbedarf wesentlich geringer, und es können standardisierte Schaltschrankkästen verwendet werden. Dadurch, daß die elektrische Verbindung der einzelnen Module ohne Querverdrahtung verwirklicht ist, können auch die als Zwischenrangierung dienende Reihenklemmen entfallen.

Im Sinne der Erfindung werden unter Modulen alle elektrischen oder elektronischen Bauteile und Geräte verstanden, welche sich typischerweise auch in einem klassischen Schaltschrank befinden, wie zum Beispiel Netzteile, Leistungsschalter, Ein/ Ausgabemodule, Sicherungen und Transformatoren. Die Module unterscheiden sich nicht in ihrer technischen Funktion von den elektrischen oder elektronischen Bauteilen und Geräten eines klassischen Schaltschrankes, sondern nur in ihrer einfacheren Ein- bzw. Ausbauweise.

Nach einer besonders vorteilhaften Ausgestaltung der Erfindung sind die einzelnen Module so in dem Schaltschrank befestigt und untereinander verbunden, daß sie werkzeuglos auswechselbar sind. Dabei erfolgt die elektrische Verbindung der einzelnen Module untereinander mittels Kontaktschwerter, so daß eine Querverdrahtung nicht erforderlich ist. Durch die Möglichkeit, unabhängig von ihrer Position in dem Schaltschrank jedes einzelne Modul auszutauschen oder neue Module hinzuzufügen, ist die Bereitstellung von Reservemodulen nicht mehr nötig, so daß der Materialaufwand erheblich reduziert werden kann.

Nach einer weiteren Ausgestaltung der Erfindung erfolgt die Verbindung zu anderen Schaltschränken und/oder zu Maschinen sowie zu einer zentralen Energieversorgung und/oder Steuerung über ein Bus-System. Über ein solches Bus-System bzw. die Busleitung erfolgt dann sowohl die elektrische Versorgung der einzelnen Schaltschränke bzw. der darin angeordneten Module als auch der Datenaustausch zwischen einer zentralen Steuerung und den Modulen oder auch zwischen einzelnen Modulen selbst. Damit entfallen Einzelleitungen und Kabelstränge, womit eine aus mehreren Maschinen bestehende Anlage sowohl übersichtlicher und einfacher in Betrieb zu nehmen ist als auch flexibler ist und damit leichter verändert werden kann. Die Möglichkeiten eines Bus-Systems können darüber hinaus auch dazu benutzt werden, eine Selbstdiagnose der Schaltschränke vorzunehmen.

Vorteilhafterweise weist der erfindungsgemäße Schaltschrank eine interne Potential- und Datenrangierung mit einer durchgängigen Stromschiene auf. Dadurch sind die einzelnen Module auch dann mit der benötigten elektrischen Leistung versorgt, wenn ein einzelnes Modul defekt ist oder ausgetauscht wird.

Im einzelnen gibt es nun eine Vielzahl von Möglichkeiten, den erfindungsgemäßen Schaltschrank auszugestalten und weiterzubilden. Dazu wird verwiesen einerseits auf die dem Patentanspruch 1 nachgeordneten Patentansprüche, andererseits auf die Beschreibung bevorzugter Ausführungsbeispiele in Verbindung mit der Zeichnung. In der Zeichnung zeigen
- Fig. 1: eine Ausführungsform eines klassischen baugruppenorientierten Schaltschrankes,
- Fig. 2: eine Ausführungsform eines erfindungsgemäßen, funktionsblockorientierten und modular aufgebauten Schaltschrankes,
- Fig. 3: den Schaltschrank aus Fig. 2, jedoch ohne Schaltschrankkasten,
- Fig. 4: eine zweite Ausführungsform eines erfindungsgemäßen Schaltschrankes, ebenfalls ohne Schaltschrankkasten, und
- Fig. 5: eine weitere Ausführungsform eines erfindungsgemäßen Schaltschrankes, ebenfalls ohne Schaltschrankkasten.

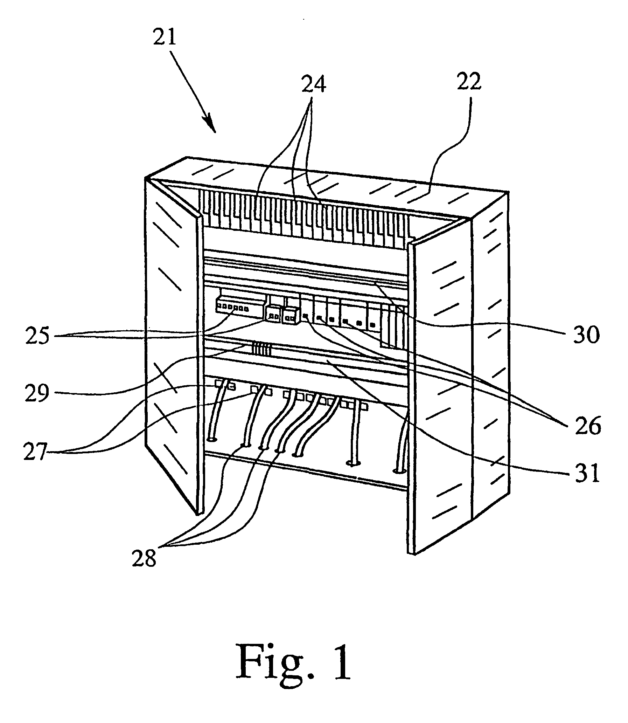

Die Fig. 1 zeigt einen klassischen, baugruppenorientierten Schaltschrank 21 mit einem Schaltschrankkasten 22 und mehreren elektrischen und elektronischen Bauteilen und Geräten. Im oberen Bereich des Schaltschrankes 21 befinden sich mehrere Ein/Ausgabemodule 24, im mittleren Bereich zum einen mehrere Sicherungselemente 25, zum anderen eine größere Anzahl an Leistungsschaltern 26 und im unteren Bereich Vorrichtungen 27 zur Befestigung von Kabelsträngen 28, die zu den einzelnen Maschinen führen. Zur Verbindung der einzelnen Bauteile und Geräte untereinander sind in dem Schaltschrank 21 mehrere Klemmen 29 zur Zugangsverdrahtung, mehrere Klemmen 30 zur Zwischenrangierung und mehrere Klemmen 31 zur Abgangsrangierung angeordnet.

Der in Fig. 1 dargestellte Schaltschrank 21 dient zur Versorgung mehrerer Maschinen, so daß er einen relativ großen Platzbedarf hat. Durch die zahlreichen Querverdrahtungen zwischen den Bauteilen und Geräten sowie den Klemmen 29, 30 und 31 ist eine Erweiterung des Schaltschrankes 21 mit zusätzlichen Bauteilen und Geräten bzw. das Austauschen von fehlerhaften Bauteilen und Geräten mit einem sehr großen Aufwand verbunden. Aus diesem Grunde muß bei der Planung eines solchen Schaltschrankes 21 nicht nur der aktuelle Bauteile- und Gerätebedarf der Maschinen berücksichtigt werden, es müssen auch Ersatzbauteile und -geräte sowie Ergänzungsbauteile und -geräte mit in den Schaltschrank 21 eingebaut sein.

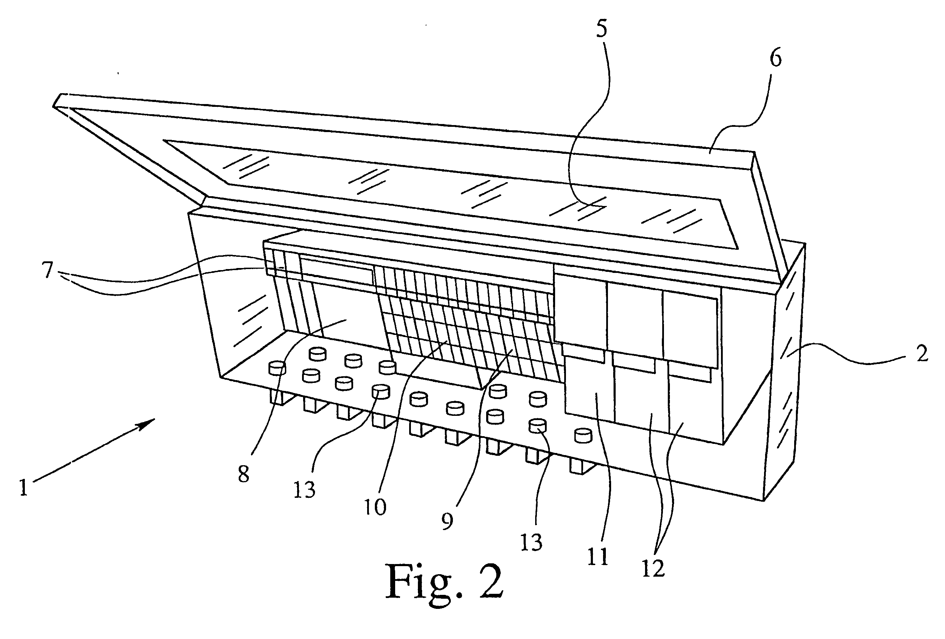

Fig. 2 zeigt nun demgegenüber einen erfindungsgemäßen Schaltschrank 1, mit einem Schaltschrankkasten 2 und darin angeordneten Modulen 3, die auf einer gemeinsamen, hier nicht sichtbaren Tragschiene 4 befestigt sind. Die einzelnen Module 3 sind hinter der Scheibe 5 einer aufklappbaren Abdeckung 6 von außen sichtbar und, wie in Fig. 2 dargestellt, bei hochgeklappter Abdeckung 6 von vorne zugänglich. Der Schaltschrank 1 ist funktionsblockorientiert aufgebaut, das heißt, daß er nur die Module 3 enthält, die für die Funktion einer Maschine notwendig sind.

Der Schaltschrank 1, wie er in Fig. 2 dargestellt ist, enthält mehrere Busklemmen 7 zum Anschluß des Schaltschrankes 1 an ein Bussystem, eine Signalüberwachungseinheit 8, mehrere Ein/Ausgabemodule 9,10, ein Netzteil 11 und zwei Lastrelais 12. Die Ein/Ausgabemodule 9 unterscheiden sich von den Ein/Ausgabemodulen 10 lediglich durch eine geringere Anzahl von Anschlußkanälen. Im Boden des Schaltschrankkastens 2 befinden sich Kabeldurchführungen 13, durch welche die Leitungen der Maschine, welche zu dem Schaltschrank 1 gehört, und Leitungen für zusätzliche Sensoren und/oder Aktoren in das Innere des Schaltschrankes 1 gelangen können. Die Kabeldurchführungen 13 dienen gleichzeitig aber auch zur Zugentlastung der angeschlossenen Leitungen. Insgesamt ist der Schaltschrank 1 und insbesondere der Schaltschrankkasten 2 so ausgeführt, das der Schaltschrank 1 mindestens der Schutzklasse IP 65 entspricht.

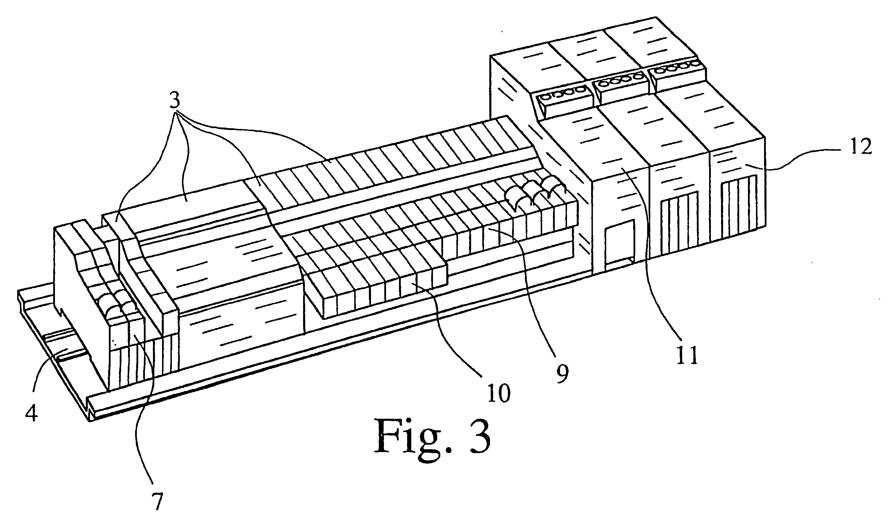

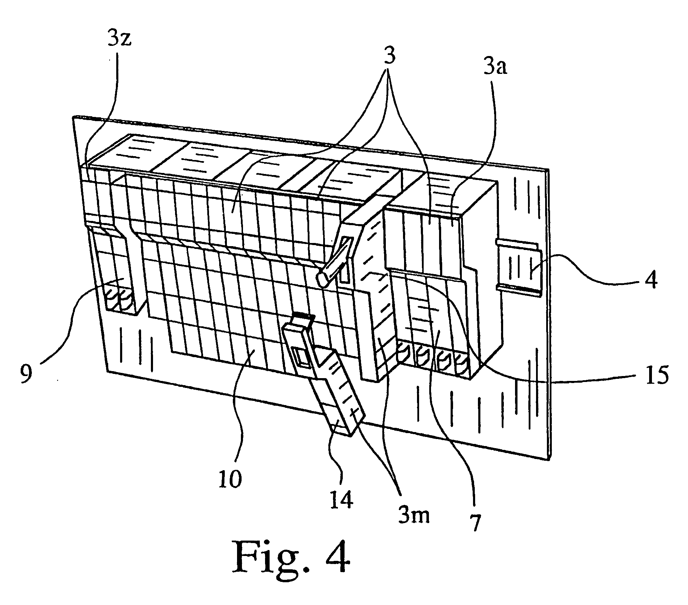

Fig. 3 zeigt denselben Schaltschrank 1 wie Fig. 2, jedoch ohne Schaltschrankkasten 2. Eine andere Ausführung eines erfindungsgemäßen Schaltschrankes 1 ist in Fig. 4 dargestellt, auch hier ohne Schaltschrankkasten 2. In den Fig. 3 und 4 ist zu erkennen, daß die einzelnen Module 3 auf einer gemeinsamen, hutförmig ausgebildeten Tragschiene 4 aufgebracht sind; vorzugsweise sind sie auf dieser Tragschiene 4 lediglich aufgerastet, so daß einzelne Module 3m, wie in Fig. 4 dargestellt, ohne Werkzeug ausgetauscht werden können. Dabei ist besonders vorteilhaft, daß die einzelnen Module 3 so ausgebildet sind, daß nicht nur ein Randmodul 3a oder 3z, sondern jedes beliebige Modul 3m ausgetauscht werden kann. Dies ist dadurch möglich, daß die Module 3 von oben auf die Tragschiene 4 aufgerastet werden können, also nicht lediglich von der Seite aufgeschoben werden können.

Im übrigen zeichnen sich sowohl die Busklemmen 7 als auch die Ein/Ausgabemodule 9 und 10 dadurch aus, daß sowohl das ganze Modul 3 als auch lediglich ein Moduloberteil 14 entfernt werden kann. Bei den Busklemmen 7 und den Ein/Ausgabemodulen 9, 10 dient das Moduloberteil 14 dabei als Steckermodul. Durch die zweiteilige Ausführung von Busklemmen 7 und Ein/Ausgabemodulen 9, 10 ist es möglich, eine fehlerhafte Busklemme 7 oder ein defektes Ein/Ausgabemodul 9 oder 10 auszutauschen, ohne daß die Verdrahtung entfernt werden muß. Es wird einfach das Moduloberteil 14 bei feststehender Verdrahtung vom Modulunterteil 15, beispielsweise durch das Lösen einer Rastverbindung, entfernt und dann das defekte Modulunterteil 15 ausgetauscht. Anschließend wird das Moduloberteil 14 wieder auf das neue Modulunterteil 15 aufgesetzt.

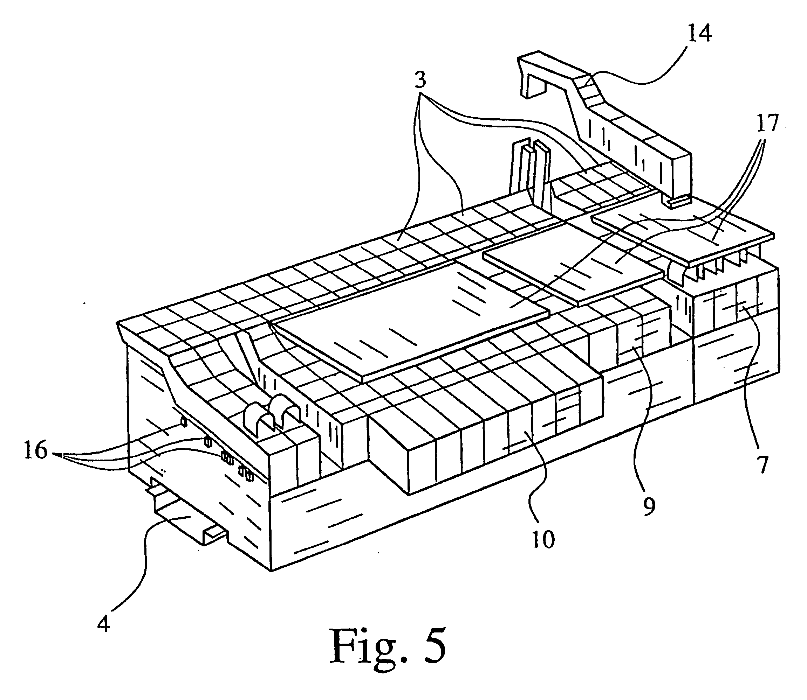

In Fig. 5 ist nun eine weitere Ausführungsform eines erfindungsgemäßen Schaltschrankes 1 dargestellt. Hierbei ist erneut die Austauschbarkeit der Module 3 bzw. der Moduloberteile 14 dargestellt. Außerdem sind in Fig. 5 Kontaktschwerter 16 zu erkennen, welche sich in den Modulen 3 befinden. Die Kontaktschwerter 16 stellen die elektrische Verbindung der einzelnen Module 3 untereinander her. Bei dem Schaltschrank 1, wie er in Fig. 5 dargestellt ist, weisen einzelne Module 3 Felder 17 zur Beschriftung und Signalkennzeichnung der Module 3 auf. Diese Felder 17 können während der Kontaktierung der Module 3 bzw. der Verdrahtung der Moduloberteile 14 entweder ganz von diesen gelöst werden oder aus ihrer in Fig. 5 gezeigten Anzeigestellung verschwenkt werden, so daß ein freier Zugang zu den Modulen 3 bzw. den Kontakten der Moduloberteile 14 möglich ist. Hierzu sind die Felder 17 mit einer ihrer beiden kurzen Seiten schwenkbar und lösbar in entsprechenden Ausnehmungen der Module 3 gelagert.

Insgesamt wird durch die verschiedenen, beispielhaften Ausführungsformen des erfindungsgemäßen Schaltschrankes 1 deutlich, daß durch den modularen Aufbau und den einfachen, werkzeuglosen Austausch einzelner Module 3 eine einfache Anpassung eines jeden einzelnen Schaltschrankes 1 an jede gegebene Situation möglich ist. Die Abstimmung der einzelnen Schaltschränke 1 auf eine jeweilige Maschine ermöglicht es darüber hinaus, bei einer aus mehreren Maschinen zusammengesetzten Anlage eine Teilinbetriebnahme durchzuführen oder vor Inbetriebnahme der gesamten Anlage Vortests der einzelnen Maschinen auszuführen. Dadurch wird der Aufbau und Anschluß einer umfangreichen Anlage sicherer, einfacher und schneller.

## Patentansprüche

1. Schaltschrank mit einem Schaltschrankkasten (2), mit mehreren Modulen (3) und mit einer Tragschiene (4), wobei die Module (3) auf der Tragschiene (4) befestigt sind,
**dadurch gekennzeichnet,**
**daß** alle für eine Maschine notwendigen Module (3) und nur diese eingebaut sind und
**daß** die elektrische Verbindung der einzelnen Module ohne Querverdrahtung verwirklicht ist, wobei die Verbindung der einzelnen Module (3) untereinander mittels Kontaktschwerter (16) erfolgt.

2. Schaltschrank nach einem der Ansprüche 1, **dadurch gekennzeichnet, daß** die einzelnen Module (3) so im Schaltschrank (1) befestigt und untereinander verbunden sind, daß sie werkzeuglos auswechselbar sind.

3. Schaltschrank nach Anspruch 2, **dadurch gekennzeichnet, daß** unabhängig von ihrer Position im Schaltschrank (1) einzelne Module (3) austauschbar und/oder neue Module (3) hinzufügbar sind.

4. Schaltschrank nach einem der Ansprüche 1 bis 3, **dadurch gekennzeichnet, daß** die Verbindung zu anderen Schaltschränken (1) und/oder zu Maschinen sowie zu einer zentralen Energieversorgung und/oder Steuerung über ein Bus-System erfolgt.

5. Schaltschrank nach einem der Ansprüche 1 bis 4, **dadurch gekennzeichnet, daß** eine interne Potential- und Datenrangierung mit einer durchgängigen Stromschiene vorgesehen ist.

6. Schaltschrank nach einem der Ansprüche 1 bis 5, **dadurch gekennzeichnet, daß** die einzelnen Module (3) Felder (17) zur Beschriftung und Signalkennzeichnung aufweisen.

7. Schaltschrank nach einem der Ansprüche 1 bis 6, **dadurch gekennzeichnet, daß** die einzelnen Module (3) auf die Tragschiene (4) aufrastbar sind.

## Claims

1. Switchgear cabinet with a switchgear box (2), with several modules (3) and with a mounting rail (4), the modules (3) being attached on the mounting rail (4),
**characterized in**
**that** all modules (3) necessary for a machine and only they are installed and
**that** the electric connection of the individual modules is realized without cross wiring, wherein the connection of the individual modules (3) takes place by means of contact blades (16).

2. Switchgear cabinet as claimed in claim 1, **characterized in** the individual modules (3) are mounted in the switchgear cabinet (1) and connected among one another such that they can be interchanged without tools.

3. Switchgear cabinet as claimed in claim 2, **characterized in that** regardless of their position in the switchgear cabinet (1) individual modules (3) can be replaced and/or new modules (3) can be added.

4. Switchgear cabinet as claimed in one of claims 1 to 3, **characterized in that** the connection to other switchgear cabinets (1) and/or to machines and to a central power supply and/or control takes place via a bus system.

5. Switchgear cabinet as claimed in one of claims 1 to 4, **characterized in that** there is internal potential and data routing with a universal busbar.

6. Switchgear cabinet as claimed in one of claims 1 to 5, **characterized in that** the individual modules (3) have fields (17) for lettering and signal identification.

7. Switchgear cabinet as claimed in one of claims 1 to 6, **characterized in that** the individual modules (3) can be latched onto the mounting rail (4).

## Revendications

1. Armoire de commande comportant un caisson d'armoire de commande (2), plusieurs modules (3) et un rail porteur (4), les modules (3) étant fixés sur le rail porteur (4),
**caractérisée en ce que**
tous les modules (3) nécessaires à une machine et seuls ceux-ci sont intégrés et que la liaison électrique des différents modules est réalisée sans câblage transversal, la liaison des différents modules (3) entre eux ayant lieu au moyen de contacteurs (16).

2. Armoire de commande selon la revendication 1, **caractérisée en ce que** les différents modules (3) sont fixés dans l'armoire de commande (1) et reliés entre eux de manière à être échangeables sans outil.

3. Armoire de commande selon la revendication 2, **caractérisée en ce que**, indépendamment de leur position dans l'armoire de commande (1), les différents modules (3) sont échangeables et/ou que de nouveaux modules (3) peuvent être ajoutés.

4. Armoire de commande selon l'une quelconque des revendications 1 à 3, **caractérisée en ce que** la liaison avec les autres armoires de commande (1) et/ou avec des machines ainsi qu'avec une alimentation énergétique et/ou une commande centrale a lieu par l'intermédiaire d'un système de bus.

5. Armoire de commande selon l'une quelconque des revendications 1 à 4, **caractérisée en ce qu'**il est prévu un système de câblage de potentiel et de données interne avec un rail de courant continu.

6. Armoire de commande selon l'une quelconque des revendications 1 à 5, **caractérisée en ce que** les différents modules (3) présentent des champs (17) d'inscription et de signalisation.

7. Armoire de commande selon l'une quelconque des revendications 1 à 6, **caractérisée en ce que** les différents modules (3) peuvent être enclenchés sur le rail porteur (4).
